# DEMANDE DE BREVET EUROPEEN

(11) **EP 0 957 618 A1**
(43) Date de publication de la demande: **17.11.1999**
(21) Numéro de dépôt: 99400982.7
(22) Date de dépôt: 22.04.1999
(51) Int. Cl.: H04L 29/06

(54) **Utilisation du couple numéro d'appel-adresse d'origine internet**

(30) Priorité: 30.04.1998 FR 9805539
(71) Demandeur: ALCATEL, 75008 Paris (FR)
(72) Inventeur: Bleuse, Patrice, 91620 La Ville du Bois (FR)
(74) Mandataire: Sciaux, Edmond

(57) **Abrégé**

L'invention concerne un procédé de personnalisation des accès au réseau internet (8) à travers le réseau téléphonique (5) et par l'intermédiaire d'un fournisseur d'accès (7); elle propose de déterminer l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau téléphonique et d'autre part de l'adresse internet allouée à cet utilisateur par le fournisseur d'accès. Ceci permet d'exécuter d'un service fonction de l'identité ainsi déterminé.

L'invention permet de retrouver l'identité d'un utilisateur contrevenant à partir simplement des paquets internet échangés, et de la relation exprimée ci-dessus. Elle s'applique notamment au filtrage, et à l'établissement d'une trace des transactions filtrées.

## Description

La présente invention a pour objet un procédé et un système de personnalisation des accès internet.

L'invention concerne le domaine de l'accès aux réseaux, et plus particulièrement l'accès au réseau internet. Dans la suite de la description, on utilisera l'exemple de ce réseau, étant entendu que l'invention pourrait aussi s'appliquer à d'autres réseaux.

Pour un utilisateur, l'accès au réseau Internet s'effectue généralement depuis un terminal utilisateur, en passant par le réseau téléphonique pour établir une communication avec un fournisseur d'accès ("Internet service provider" en langue anglaise, ou ISP). Le réseau téléphonique peut être le réseau téléphonique commuté classique, un réseau public mobile, un réseau numérique tel le réseau numérique à intégration de service français. Le fournisseur d'accès alloue dynamiquement une adresse internet à l'utilisateur, et lui permet d'émettre et recevoir des communications suivant le protocole internet, vers et en provenance de fournisseurs de contenu ("contents provider" en langue anglaise).

On appelle services du "réseau intelligent" l'ensemble des services dits à valeur ajoutée fournis par les opérateurs téléphoniques, au delà de la simple offre d'établissement d'une ligne et de facturation. Ces services comprennent par exemple le transfert d'appel, le prépaiement, le libre appel, les services de tarification spécifique liés à certains appels, l'authentification de l'appelant et autres.

Le développement rapide de l'internet pose des problèmes nouveaux; en terme de contenu, les informations disponibles sur le réseau peuvent présenter un caractère choquant (informations à caractère érotique, notamment), ou leur diffusion peut être illégale dans certains contextes (certaines informations politiques). En fonction de l'utilisation envisagée du réseau, des formes de filtrages sont souhaitées; filtrage par les parents de l'accès des enfants au réseau; filtrage par les États des informations diffusées sur leur territoire par le réseau; filtrage par les entreprises des accès des salariés au réseau.

Diverses solutions ont ainsi été proposées pour permettre un filtrage des informations obtenues sur le réseau; des produits logiciels destinés à être installés sur le terminal d'un utilisateur permettent de filtrer l'accès à certains sites internet. Ces produits sont limités et présentent les inconvénients suivants: le filtrage par les noms de site est difficile à mettre en oeuvre, dans la mesure où il exige une mise à jour permanente. Une telle mise à jour est difficilement réalisable pratiquement au vu du grand nombre de sites créés chaque jour, et au vu de la facilité technique de transfert d'un site vers une autre adresse internet. Enfin, ces dispositifs de filtrage peuvent être relativement facilement désactivés, par exemple à l'aide d'informations disponibles sur le réseau.

L'invention propose une solution au problème du filtrage des transactions sur un réseau tel que le réseau internet; elle permet de fournir un suivi efficace du filtrage. Elle assure ainsi une efficacité et un meilleur contrôle des fonctions de filtrage.

Plus précisément, l'invention propose un procédé de personnalisation d'accès au réseau internet à travers le réseau d'accès et par l'intermédiaire d'un fournisseur d'accès allouant dynamiquement une adresse internet à chaque utilisateur, comprenant les étapes
- de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et
- d'exécution d'un service fonction de l'identité ainsi déterminé.

Dans un mode de réalisation, le procédé comprend une étape de filtrage par le fournisseur d'accès des paquets internet.

Dans un autre mode de réalisation, le service comprend le traçage de l'identité de l'utilisateur ayant envoyé ou reçu des paquets filtrés.

Avantageusement, le service comprend la déconnexion de l'utilisateur ayant envoyé ou reçu des paquets filtrés.

L'invention propose aussi un service de personnalisation d'accès au réseau internet à travers un réseau d'accès et par l'intermédiaire d'un fournisseur d'accès allouant dynamiquement une adresse internet à chaque utilisateur, comprenant les étapes
- de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et
- d'exécution d'un service fonction de l'identité ainsi déterminé.

Dans un mode de réalisation, le procédé comprend une étape de filtrage par le fournisseur d'accès des paquets internet.

Il peut aussi comprendre le traçage de l'identité de l'utilisateur ayant envoyé ou reçu des paquets filtrés, ou encore la déconnexion de l'utilisateur ayant envoyé ou reçu des paquets filtrés.

L'invention propose aussi un serveur de fournisseur d'accès au réseau internet, comprenant des moyens pour allouer dynamiquement une adresse internet à chaque utilisateur lors d'un appel dudit utilisateur sur un réseau, caractérisé par des moyens de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et par des moyens d'exécution d'un service fonction de l'identité ainsi déterminé.

Avantageusement, le serveur comprend en outre une machine (23) de filtrage des paquets internet.

Dans un mode de réalisation, le service comprend le traçage de l'identité de l'utilisateur ayant envoyé ou reçu des paquets filtrés, ou encore la déconnexion de l'utilisateur ayant envoyé ou reçu des paquets filtrés.

D'autres caractéristiques et avantages de l'invention apparaîtront à la lecture de la description qui suit de modes de réalisation de l'invention, donnée à titre d'exemple uniquement, au cas du réseau internet, et en référence aux figures qui montrent:
- figure 1, une représentation schématique d'une liaison internet.
- figure 2, une représentation schématique de l'architecture d'un serveur de fournisseur d'accès selon l'invention.

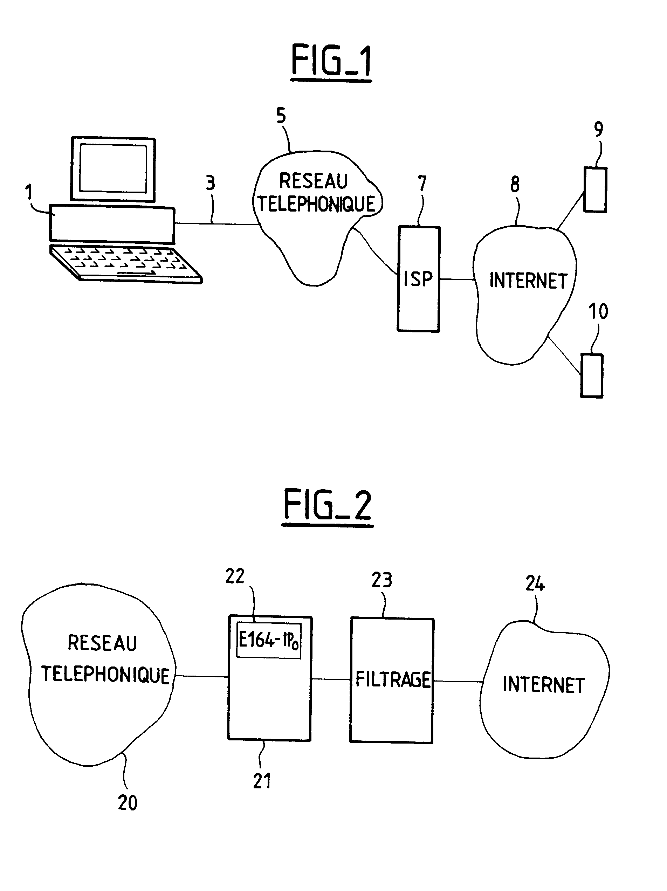

On a porté sur la figure 1 un terminal utilisateur 1, relié comme symbolisé par la liaison 3 à un réseau d'accès 5; dans l'exemple de la figure et dans toute la suite de la description, on considère un réseau téléphonique, tel que le réseau public commuté, un réseau public mobile ou autre. Le terminal utilisateur peut être relié au réseau directement, ou par l'intermédiaire d'un autocommutateur privé. On a porté sur la figure un fournisseur d'accès à l'internet 7, ainsi qu'une représentation schématique du réseau internet 8, avec deux fournisseurs de contenu 9 et 10. Entre le terminal utilisateur 1 et le fournisseur de service - à gauche du fournisseur de service sur la figure 1, la communication s'effectue sur le canal utilisé dans le réseau téléphonique en cause, et qui est d'une nature différente selon ce réseau. Entre le fournisseur d'accès et les fournisseurs de contenu, la communication s'effectue suivant le protocole internet.

L'établissement d'une liaison est le suivant. L'utilisateur effectue le numéro d'appel du fournisseur d'accès. Le fournisseur d'accès recevant l'appel de l'utilisateur l'authentifie si nécessaire, puis alloue dynamiquement une adresse internet, qui permet d'effectuer des transactions internet. L'utilisateur disposant d'une adresse internet peut envoyer des messages suivant le protocole internet, avec comme adresse internet d'origine IP₀ l'adresse qui lui est allouée par le fournisseur d'accès, et une adresse internet de destination IP_{D} et un contenu de message IP PDU (acronyme de l'anglais "internet protocol data unit") déterminé par la nature de la transaction. Il reçoit en retour des messages internet ayant comme adresse internet de destination l'adresse allouée dynamiquement par le fournisseur d'accès. A la fin de la transaction, l'utilisateur raccroche, et le fournisseur d'accès peut réutiliser l'adresse précédemment allouée pour une autre transaction.

Ainsi, pendant toute la durée de la transaction, il existe une relation bi-univoque entre le numéro d'appelant du terminal utilisateur - le numéro E164 dans la terminologie internationale et l'adresse internet allouée dynamiquement par le fournisseur d'accès.

L'invention propose d'utiliser pour le filtrage des moyens prévus non pas au niveau du terminal utilisateur, mais au contraire au niveau du fournisseur d'accès; en outre, pour assurer une trace du filtrage, l'invention propose d'utiliser le couplage existant entre le numéro E164 d'appelant de l'utilisateur et l'adresse internet allouée dynamiquement par le fournisseur d'accès.

La figure 2 montre une représentation schématique de la structure de l'architecture d'un serveur d'un fournisseur d'accès selon l'invention; le serveur du fournisseur comprend une première machine 21 connue en soi, reliée au réseau téléphonique 20, qui effectue toutes les opérations nécessaires au maintien de la communication téléphonique avec l'utilisateur, alloue les adresses internet, et transmet vers et depuis le réseau internet 24 les paquets ou datagrammes envoyés et reçus par l'utilisateur. En outre, la machine 21 comprend des moyens 22 de stockage du couple E164-IP₀ pour chaque utilisateur connecté. En outre, le serveur du fournisseur d'accès comprend une machine de filtrage 23, qui filtre les transactions internet en provenance et à destination de la première machine 21.

Le fonctionnement du serveur du fournisseur d'accès selon l'invention est le suivant. Après l'établissement de la liaison téléphonique et l'allocation d'une adresse internet, les transactions émises par l'utilisateur peuvent faire l'objet d'un premier filtrage sur l'adresse internet de destination; ce premier filtrage permet d'éliminer ou de rejeter les transactions vers des sites indésirables, par exemple des sites dont l'adresse se trouve dans une liste de sites à caractère pornographique mise à jour par le fournisseur d'accès ou par un service utilisé par lui.

Les transactions internet destinées à un utilisateur peuvent aussi faire l'objet d'un filtrage de contenu dans la machine de filtrage. Ce filtrage de contenu permet de filtrer des transactions qui ne proviennent pas d'un site d'adresse identifiée comme indésirable, mais dont le contenu ne répond pas à des critères de filtrage - par exemple présence dans l'IP PDU du message de mots se trouvant dans une liste -.

Les caractéristiques du filtrage à appliquer peuvent être fonction de l'abonnement de l'utilisateur, ou être déterminées en fonction de l'authentification de l'utilisateur - par exemple de son mot de passe - si un même abonnement couvre plusieurs utilisateurs. En outre, l'invention peut être mise en oeuvre avantageusement avec l'invention décrite dans la demande de brevet déposée le même jour par la demanderesse, sous le titre "Utilisation du couplage entre le numéro d'appel et l'adresse d'origine internet" (référence interne F°101493). Dans cette demande, il est proposé d'utiliser les services du réseau intelligent pour affecter à chaque utilisateur un profil d'appelant internet, qui contient des informations relatives à la liaison souhaitée, et par exemple des informations de filtrage. On peut alors utiliser les informations contenues dans le profil d'appelant internet pour paramétrer le filtrage mis en oeuvre par le fournisseur d'accès; ceci permet une adaptation du filtrage mis en oeuvre à chaque utilisateur, indépendamment du fournisseur d'accès choisi.

Dans un cas comme dans l'autre, l'invention propose ainsi d'effectuer un filtrage au niveau du fournisseur d'accès. L'accès aux listes et leur modification est beaucoup plus difficile que l'accès aux listes gérées localement par un utilisateur comme dans les systèmes de l'art antérieur. En outre, le fournisseur d'accès offrant le service de filtrage dispose de moyens plus adaptés à la mise à jour des listes; dans la mesure où le service correspond à un engagement du fournisseur d'accès, la qualité du service devra correspondre aux attentes des clients, et sera sans doute supérieure à celle des filtrages de l'art antérieur.

L'invention propose en outre, pour assurer une trace du filtrage, d'utiliser le couplage existant entre le numéro E164 d'appelant de l'utilisateur et l'adresse internet IP₀ allouée dynamiquement par le fournisseur d'accès. Ce couplage permet de déterminer quels sont les utilisateurs dont les transactions ont fait l'objet d'un filtrage.

Pour cela, lorsqu'une transaction sortante -dirigée vers le réseau internet - fait l'objet d'un filtrage, typiquement un filtrage sur l'adresse internet de destination, la machine de filtrage relève l'adresse internet d'origine; cette adresse est celle allouée par le fournisseur d'accès à un utilisateur; la machine consulte ensuite les moyens 22 de stockage du couple E164-IP0, et en déduit le numéro d'appelant de l'utilisateur; elle peut aussi en déduire son identité, si l'utilisateur a été authentifié lors de l'établissement de la connexion.

Lorsqu'une transaction entrante fait l'objet d'un filtrage, typiquement un filtrage de contenu sur l'IP PDU, la machine de filtrage relève l'adresse internet de destination; cette adresse est celle allouée par le fournisseur d'accès à un utilisateur; de la même façon, la machine consulte ensuite les moyens 22 de stockage du couple E164-IP0, et en déduit le numéro d'appelant de l'utilisateur; elle peut aussi en déduire son identité, si l'utilisateur a été authentifié lors de l'établissement de la connexion.

Le fournisseur d'accès peut ainsi établir une trace du filtrage; cette trace permet d'une part d'assurer les clients du service de son efficacité, par exemple en permettant à des parents de constater le filtrage des appels de leurs enfants; elle peut aussi être utilisée pour le contrôle de la dissémination d'informations, par exemple à des fins policières pour la diffusion d'informations interdites.

Si l'accès au fournisseur d'accès s'effectue par l'intermédiaire d'un réseau intelligent, et que le fournisseur d'accès peut transférer des informations vers l'unité de gestion de ce réseau intelligent, il est aussi possible d'utiliser la trace du filtrage pour d'autres applications, comme décrit dans la demande de brevet précitée de la demanderesse. Le réseau téléphonique intelligent peut alors interrompre l'appel s'il reçoit une indication d'accès prohibé envoyée par le fournisseur d'accès.

Dans un tel cas, on peut aussi utiliser l'identité de l'utilisateur, obtenue par le couple E164-IP₀ pour éviter une nouvelle connexion du même appelant, par exemple après une ou plusieurs violations du filtrage; en effet, il suffit alors que le fournisseur d'accès transmette au réseau intelligent le numéro E164 de l'utilisateur ou son identité pour indiquer qu'il refusera les appels ultérieurs. L'invention permet ainsi de refuser l'appel téléphonique vers le fournisseur d'accès; ceci évite en conséquence d'encombrer les ressources téléphoniques du fournisseur d'accès par des appels qui doivent être rejetés, pour une raison ou pour une autre.

L'invention peut être mise en oeuvre par divers moyens matériels, comme cela apparaît à l'homme du métier.

Bien entendu, la présente invention n'est pas limitée aux exemples et modes de réalisation décrits et représentés, mais elle est susceptible de nombreuses variantes accessibles à l'homme de l'art. On pourrait ainsi appliquer l'invention à d'autres types de réseaux que le réseau internet. La référence au numéro E164 est donné à titre de référence car largement utilisée; le procédé de l'invention s'applique aussi à toute numérotation E164 étendu, ou à tout numéro assimilé dans le réseau d'accès.

On peut aussi utiliser le couple numéro d'appelant-adresse internet allouée par le fournisseur d'accès pour d'autres types de service à valeur ajoutée.

## Revendications

1. Procédé de personnalisation d'accès au réseau internet (8) à travers le réseau d'accès (5) et par l'intermédiaire d'un fournisseur d'accès (7) allouant dynamiquement une adresse internet à chaque utilisateur, comprenant les étapes
- de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et
- d'exécution d'un service fonction de l'identité ainsi déterminé.

2. Procédé selon la revendication 1, caractérisé en ce que le procédé comprend une étape de filtrage par le fournisseur d'accès des paquets internet.

3. Procédé selon la revendication 2, caractérisé en ce que le service comprend le traçage de l'identité de l'utilisateur ayant envoyé ou reçu des paquets filtrés.

4. Procédé selon la revendication 2 ou 3, caractérisé en ce que le service comprend la déconnexion de l'utilisateur ayant envoyé ou reçu des paquets filtrés.

5. Service de personnalisation d'accès au réseau internet (8) à travers un réseau d'accès (5; 11) et par l'intermédiaire d'un fournisseur d'accès (7) allouant dynamiquement une adresse internet à chaque utilisateur, comprenant les étapes
- de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et
- d'exécution d'un service fonction de l'identité ainsi déterminé.

6. Service selon la revendication 5, caractérisé en ce que le procédé comprend une étape de filtrage par le fournisseur d'accès des paquets internet.

7. Service selon la revendication 6, caractérisé en ce que le service comprend le traçage de l'identité de l'utilisateur ayant envoyé ou reçu des paquets filtrés.

8. Service selon la revendication 6 ou 7, caractérisé en ce que le service comprend la déconnexion de l'utilisateur ayant envoyé ou reçu des paquets filtrés.

9. Serveur de fournisseur d'accès au réseau internet (24), comprenant des moyens (21) pour allouer dynamiquement une adresse internet à chaque utilisateur lors d'un appel dudit utilisateur sur un réseau, caractérisé par des moyens de détermination de l'identité d'un utilisateur à partir de l'adresse internet d'origine ou de destination d'un paquet internet envoyé ou reçu par l'utilisateur, et du couple formé d'une part du numéro d'appelant de l'utilisateur sur le réseau d'accès et d'autre part de l'adresse internet allouée à cet utilisateur par le fournisseur d'accès, et par des moyens d'exécution d'un service fonction de l'identité ainsi déterminé.

10. Serveur selon la revendication 9, caractérisé en ce qu'il comprend en outre une machine (23) de filtrage des paquets internet.

11. Serveur selon la revendication 10, caractérisé en ce que le service comprend le traçage de l'identité de l'utilisateur ayant envoyé ou reçu des paquets filtrés.

12. Serveur selon la revendication 10 ou 11, caractérisé en ce que le service comprend la déconnexion de l'utilisateur ayant envoyé ou reçu des paquets filtrés.
